# EUROPÄISCHE PATENTANMELDUNG

(11) **EP 4 394 909 A1**
(43) Veröffentlichungstag der Anmeldung: **03.07.2024**
(21) Anmeldenummer: 23216197.6
(22) Anmeldetag: 13.12.2023
(51) Int. Cl.: H01M 4/04, H01M 10/44, H01M 10/058, H01M 10/0525, H01F 7/02

(54) **LITHIUM-IONEN-BATTERIEZELLE**

(30) Priorität: 02.01.2023 DE 102023200003
(71) Anmelder: VOLKSWAGEN AG, 38440 Wolfsburg (DE)
(72) Erfinder: Jamadar, Kartik, 38442 Wolfsburg (DE)

(57) **Zusammenfassung**

Die Erfindung betrifft eine Lithium-Ionen-Batteriezelle (2) mit zumindest einer Anode (A) und einer Kathode (K) mit zwischengeordnetem Separator (S), die mit einem Elektrolyt (E) benetzt sind, wobei insbesondere während eines Ladevorgangs und/oder einer Formation sich Lithiumionen im elektrischen Feld (I) zwischen Anode (A) und Kathode (K) bewegen. Erfindungsgemäß ist der Lithium-Ionen-Batteriezelle (2) zumindest ein Magnet (M), etwa ein Permanentmagnet oder ein Elektromagnet, zugeordnet, dessen Magnetfeld (B) das elektrische Feld zwischen Anode (A) und Kathode (K) überlagert.

## Beschreibung

Die Erfindung betrifft eine Lithium-Ionen-Batteriezelle nach dem Oberbegriff des Anspruches 1 sowie ein Verfahren zur Herstellung einer solchen Lithium-Ionen-Batteriezelle nach Anspruch 10.

Eine gattungsgemäße Lithium-Ionen-Batteriezelle weist zumindest eine Anode, eine Kathode sowie einen zwischengeordneten Separator auf, die mit einem Elektrolyt benetzt sind. Während eines Ladevorgangs und/oder einer Formation bewegen sich Lithiumionen im elektrischen Feld zwischen Anode und Kathode. Die Lithiumionen werden im Ladevorgang im Aktivmaterial der Anode eingelagert. Umgekehrt werden die Lithiumionen im Entladevorgang im Aktivmaterial der Kathode eingelagert.

Die Aufgabe der Erfindung besteht darin, eine Lithium-lonen-Batteriezelle bereitzustellen, in der im Vergleich zum Stand der Technik ein beschleunigter Ladevorgang ermöglicht ist.

Die Aufgabe ist durch die Merkmale des Anspruches 1 oder 10 gelöst. Bevorzugte Weiterbildungen der Erfindung sind in den Unteransprüchen offenbart.

Die Erfindung geht von einer Lithium-Ionen-Batteriezelle aus, die zumindest eine Anode, eine Kathode sowie einen zwischengeordneten Separator aufweist. Diese sind allesamt mit Elektrolyt benetzt. Während eines Ladevorgangs und/oder einer Formation bewegen sich die Lithiumionen im elektrischen Feld zwischen der Anode und der Kathode. Gemäß dem kennzeichnenden Teil des Anspruches 1 ist der Lithium-Ionen-Batteriezelle zumindest ein Magnet, etwa ein Permanentmagnet oder ein Elektromagnet, zugeordnet. Dessen Magnetfeld überlagert das zwischen der Anode und der Kathode gebildete elektrische Feld. Auf diese Weise wird auf die Lithiumionen eine Lorentzkraft ausgeübt, mittels der eine lonenbewegung der Lithiumionen beeinflussbar ist. Dadurch ergeben sich mehr Freiheitsgrade bei der lonenbewegung, wodurch eine Einlagerung der Lithiumionen in der Anode beziehungsweise der Kathode sowie insgesamt ein Ladevorgang beschleunigt wird.

Erfindungsgemäß wird ein externes Magnetfeld während des Lade- und Formierungsprozesses um die Zelle gelegt, so dass die Bewegung der Lithium-lonen-Zelle durch die Lorentz-Kraft beschleunigt werden kann. Dabei können die folgenden zwei Methoden zur Anwendung eines Magnetfeldes zum Einsatz kommen. Bei der ersten Methode ist das Magnetfeld in Richtung und Stärke festgelegt und wird durch einen Permanentmagneten erzeugt. Dies kann eine Lorentzkraft senkrecht zum elektrischen Feld erzeugen. Aufgrund des elektrischen und des magnetischen Feldes kann den Lithium-Ionen eine Bogen-/Kreisbewegung und aufgeprägt werden, so dass die Lorentzkraft als Zentripetalkraft wirkt. Bei Erhöhung der magnetischen Felddichte kann die Lorentz-Kraft und damit die auf das Ion wirkende Kraft erhöht werden. Dadurch wird das Ion beschleunigt.

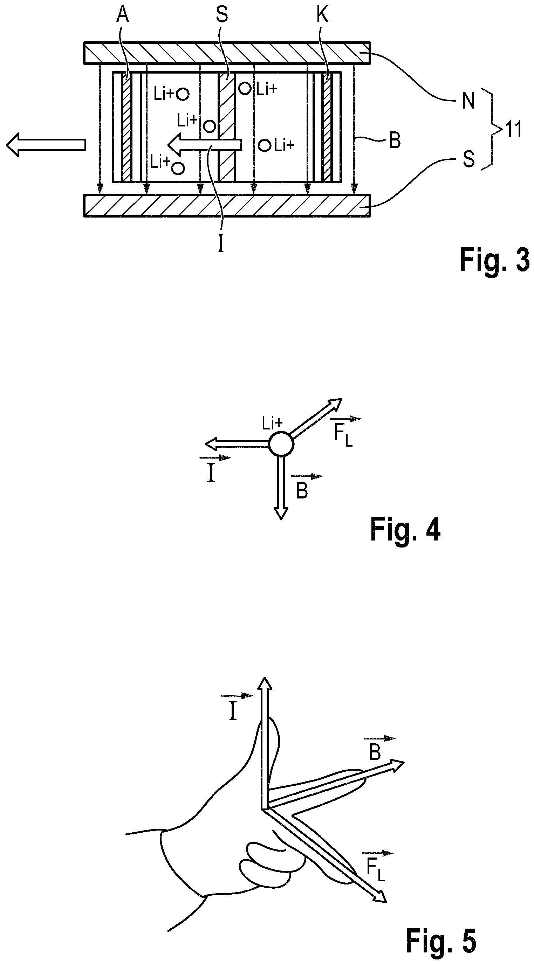

Das magnetische Feld kann senkrecht zum elektrischen Feld ausgerichtet sein. Dies ist von Bedeutung, um die Lorentzkraft senkrecht zum elektrischen und magnetischen Feld zu erzeugen. Alle drei Felder, d.h. das elektrische Feld, das magnetische Feld und die Lorentzkraft, können durch die Drei-Finger-Regel der linken Hand in ihrer Richtung identifiziert werden. Hier ist der Daumen das elektrische Feld und liegt parallel zum lonenstrom. Der Zeigefinger zeigt in Richtung des magnetischen Feldes und der Mittelfinger zeigt in Richtung der Lorentzkraft. In der Figur 5 ist I der lonenstrom, der während der Aufladung zwischen Kathode und Anode fließt. Dieser ist senkrecht zur Elektrodenoberfläche. B ist die magnetische Flussdichte. Sie ist die Richtung des Magnetfeldes, das sich vom Nordpol zum Südpol bewegt. F_{L} ist die Lorentzkraft, die auf die Ladung (hier Lithium-Ionen) wirkt. Die Richtung des lonenstroms I ist entgegengesetzt zur Stromrichtung, d.h. zur Fließrichtung der Elektronen. Daher wird in der Figur 5 eine modifizierte Linke-Hand-Regel angewendet.

Gemäß einer Prozessvariante kann das Magnetfeld in Größe und Richtung so verändert werden, dass die Lithium-Ionen gezwungen werden, sich zur bevorzugten Elektrodenoberfläche zu bewegen. Auf diese Weise wird nur in diesem Bereich mehr Lithium-Ionen eingelagert als in anderen Bereichen.

Erfindungsgemäß kann das Magnetfeld derart angesteuert werden, dass sich ein Wirbeleffekt in der Bewegung der Lithium-Ionen ergibt. Dadurch wird die Winkelgeschwindigkeit des Lithium-Ions zusätzlich zu seiner linearen Geschwindigkeit erhöht. Auf diese Weise kann sich das Lithium-Ion leichter in zufällig verteilte Poren des Separators bewegen, da es sowohl eine lineare als auch eine kreisförmige Bewegungskomponente aufweist. Ein zirkuläres Magnetfeld kann entweder durch Rotation der Zelle in einem permanenten, ortsfesten Magnetfeld oder durch ein Magnetfeld erzeugt werden, das durch einen oszillierenden Strom durch einen Stromleiter erzeugt wird. Der Stromleiter wird um die Zelle gelegt. Dies kann auch durch Rotation von Permanentmagneten um die Zelle geschehen.

Da die Lithium-Ionen durch die Lorentz-Kraft abgelenkt werden, müssen sie eine große Strecke zurücklegen, um die andere Elektrode zu erreichen. Diese zusätzliche Strecke wird jedoch durch die hohe Geschwindigkeit kompensiert, die durch die zusätzliche Lorentz-Kraft erzeugt wird. Aufgrund der höheren Geschwindigkeit, mit der die Lithium-Ionen in das Aktivmaterial eindringen, können sie sich schneller einlagern. Auch die höhere Winkelgeschwindigkeit der Lithium-Ionen trägt zum Abbau der Lithium-Dendriten auf dem Lithium-Metall bei.

Die auf die Lithium-Ionen wirkende Lorentz-Kraft ist als die Kraft definiert, die auf ein geladenes Teilchen q (d.h. Lithium-Ion) ausgeübt wird, das sich mit der Geschwindigkeit v durch ein elektrisches Feld E und ein magnetisches Feld B bewegt. Die gesamte elektromagnetische Kraft F auf das geladene Teilchen wird Lorentz-Kraft genannt und wird wie folgt berechnet: F = qE + qv × B. Die Lorentz-Kraft hat eine Richtung senkrecht zur Geschwindigkeit und zum Magnetfeld. Die Magnetkraft ist proportional zu q und zum Betrag des Vektor-Kreuzprodukts v × B.

Bezogen auf den Winkel φ zwischen v und B ist der Betrag der Kraft gleich qvB sin φ. Steht v senkrecht zu B (d. h. mit einem Winkel φ zwischen v und B von 90°), so folgt das Lithium-Ion einer Kreisbahn mit einem Radius von r = mv/qB. Ist der Winkel φ kleiner als 90°, so ist die Bahn des Lithium-Ions eine Helix mit einer Achse parallel zu den Feldlinien. Ist φ gleich Null, wirkt keine magnetische Kraft auf das Lithium-Ion. Es bewegt sich dann unabgelenkt entlang der Feldlinien.

Erfindungsgemäß können die Lithium-Ionen durch die Lorentz-Kraft abgelenkt werden und dadurch eine höhere resultierende Ionen-Geschwindigkeit erzeugt werden. Durch die Ablenkung kann das Lithium-Ion zudem absichtlich auf einen bevorzugten Bereich der Elektrodenoberfläche fokussiert werden. Die zuvor gezeigte Idee kann für alle Arten von Zellformaten wie Beutel, zylindrisch und prismatisch verwendet werden.

Wenn das Magnetfeld durch Änderung der Polrichtung verändert wird, kehrt sich auch die Lorentzkraft um. Beispielhaft ist der Nordpol an der Zellen-Oberseite und der Südpol des Magnets an der Zellen-Unterseite, so dass das Magnetfeld von oben nach unten ausgerichtet ist und die Lorentz-Kraft nach rechts ausgerichtet ist. Wenn umgekehrt der Nordpol unten positioniert ist und der Südpol oben positioniert ist, wird die Lorentz-Kraft nach links gerichtet. Das bedeutet, dass das Lithium-Ion nach links abgelenkt wird.

Wenn der Permanentmagnet um die Zelle gedreht wird oder die Zelle im Magnetfeld gedreht wird, folgen die Lithiumionen einer Sinuskurve. Das bedeutet, dass das Lithium-Ion gezwungen wird, sich in den zufällig angeordneten Poren des Separators und auch in den Aktivmaterialien einzulagern. Außerdem kann es sich aufgrund der erhöhten resultierenden Geschwindigkeit leichter in das schichtweise strukturierte Metalloxid auf der Kathode oder das schichtweise strukturierte Graphit in der Anode einlagern.

Die resultierende Geschwindigkeit ist der Vektor, der von beiden Geschwindigkeiten abhängig ist. Die erste Geschwindigkeit (parallel zum elektrischen Feld) kann nicht verändert werden, da sie vom elektrischen Feld gesteuert wird. Die zweite Geschwindigkeit (senkrecht zum elektrischen Feld) kann durch den magnetischen Fluss beeinflusst werden. Durch die Erhöhung des magnetischen Flusses nimmt die Lorentzkraft zu, was auch die vertikale Geschwindigkeit und damit die resultierende Geschwindigkeit erhöht.

In der nächsten Folie sind die Permanentmagnete nicht mehr oben und unten angeordnet, sondern vielmehr beidseitig der Zelle. In diesem Fall lenkt die Lorentzkraft die Lithium-Ionen in vertikaler Richtung ab. Wenn dieses Magnetfeld aufgrund der rotierenden Magnete umgekehrt wird, bewegen sich die Lithium-Ionen in Sinusform mit auf- und absteigender Amplitude.

Wenn alle vier Magnetfelder verwendet und um die Zelle gedreht werden, bewegen sich die Lithium-Ionen in Richtung Anode, allerdings in Spiralform. Dadurch erhalten die Lithium-Ionen mehr Freiheitsgrade, um sich in Poren einzulagern, die in horizontaler Richtung nicht leicht zugänglich sind. Durch die Anordnung mehrerer Magnete unterschiedlicher Stärke kann man die Geschwindigkeit der Lithium-Ionen-Bewegung schrittweise erhöhen.

Bei der zweiten Idee kann man anstelle eines Permanentmagneten ein Magnetfeld verwenden, das durch den Stromfluss durch eine leitende Spule erzeugt wird. Indem man einen Wechselstrom durchlässt, kann man ein rotierendes Magnetfeld erzeugen, das zu einer Lorentz-Kraft führt, die eine spiralförmige Bewegung der Lithium-Ionen bewirkt. Hier ist es einfach, das Magnetfeld zu ändern, indem man die Wicklungen der Spule oder die Stärke des durch die Spule fließenden Stroms ändert.

Es können entweder vier Spulen verwendet werden, die zu einem bestimmten Zeitpunkt Gleichstrom erhalten, so dass ein sich drehendes Magnetfeld erzeugt werden kann. Oder man kann eine Spule mit rotierendem Wechselstrom haben.

Nachfolgend werden die wesentlichen Unterschiede der Erfindung gegenüber dem Stand der Technik wie folgt zusammengefasst: Die Zelle steht während des Ladevorgangs unter dem Einfluss eines magnetischen Feldes, das eine gleichmäßige und schnelle Aufladung ermöglicht. Das Magnetfeld wird entweder durch einen Dauermagneten oder durch einen Elektromagneten (Strom durch die Spule) erzeugt. Das Magnetfeld erzeugt eine Lorentz-Kraft auf jedes Lithium-Ion. Diese Kraft lenkt das Lithium-Ion ab, und so kann man den Lithium-Ionenstrom gezielt in Richtung der gewünschten Elektrodenoberfläche lenken. Durch Umkehrung des Magnetfeldes kann man eine sinusförmige Bewegung der Lithium-Ionen erzeugen. Durch ein rotierendes Magnetfeld kann man eine spiralförmige Lithium-Ionen-Bahn erzeugen. Lithiumionen treten in das Aktivmaterial im Winkel zur Elektrodenoberfläche ein und nicht senkrecht zur Oberfläche. Dies verleiht dem Dendriten eine Biegekraft und entfernt schwache Dendriten. Auf diese Weise hilft die spiralförmige Bewegung der ankommenden Lithium-Ionen, das Lithium-Metall von Dendriten zu reinigen. Der Weg des Lithium-Ions wird verlängert, aber auch die Geschwindigkeit des Lithium-Ions wird erhöht. Durch den Einsatz mehrerer kleinerer Magnete mit unterschiedlichem Magnetfeld kann die Geschwindigkeit der Lithium-Ionen allmählich erhöht werden. Die Lithiumionen haben mehr Freiheitsgrade für ihre Bewegung, was ihnen hilft, sich in schwer zugänglichen Bereichen der Anode und Kathode einzulagern. Auch der Durchgang durch einen Separator mit zufälligen Poren ist viel einfacher. Der Elektronenkreis befindet sich außerhalb des Magnetfelds, so dass die Elektronen keine Lorenzkraft erfahren. Nur die Anoden- und Kathodenzunge erfahren eine Kraft. Um zu verhindern, dass sich die Lasche aufgrund dieser Kraft durchbiegt, kann man sie mit einer Klemme fixieren. Die Lithium-Ionen im Aktivmaterial erfahren ebenfalls diese Lorenz-Kraft, die ihnen hilft, sich aus der kovalenten Bindung mit dem Metalloxid zu lösen. Die oszillierende Lorenzkraft übt eine zusätzliche Vibration auf die Lithium-Ionen aus, damit sie sich aus der kovalenten Bindung lösen und das Aktivmaterial aus jeder Richtung verlassen können. Die spiralförmige Bewegung der Lithium-Ionen führt zu einer Erwärmung, wenn sie den Elektrolyten passieren. Dieser Temperaturanstieg trägt dazu bei, die Viskosität zu verringern und die Mobilität der Ionen zu erhöhen. Das bedeutet, dass man absichtlich mehr Wärme erzeugen kann, indem man den Weg der Lithium-Ionen verlängert. Auf diese Weise kann man den Vorteil einer höheren Mobilität der Lithium-Ionen und eines geringeren Innenwiderstands aufgrund des Temperaturanstiegs nutzen.

Die Vorteile der Erfindung sind nachfolgend wie folgt zusammengefasst: Gleichmäßige Ladungsentwicklung auf der Elektrodenoberfläche trotz Oberflächenunterschieden. Dies geschieht durch die gezielte Einlagerung von Lithium-Ionen in die bevorzugte Oberfläche der Elektrode. Es ist auch möglich, dass man einige Elektrodenoberflächen hat, auf denen man keine Ladung wünscht. In diesem Fall werden die Lithium-Ionen so abgelenkt, dass einige Bereiche keine Einlagerung von Lithium-Ionen erfahren. Diese Idee könnte das Problem der geringen Mobilität von Lithium-Ionen in viskosen Elektrolyten wie Festkörper- oder Polymerelektrolyten lösen. Aufbrechen schwacher Dendriten durch die spiralförmige Bewegung von Lithium-Ionen. Dies ist wie die Selbstreinigung der Anode durch die Verwirbelung der Lithium-Ionen. Einfache Einlagerung in kleine und schwer zugängliche Porositäten. Leichte Bewegung durch den Abscheider aufgrund des größeren Freiheitsgrades der Lithium-Bewegungen. Höhere Lithium-Ionen-Geschwindigkeit aufgrund der Lorenz-Kraft möglich. Diese Geschwindigkeit kann schrittweise erhöht werden, indem mehrere Magnetfelder unterschiedlicher Stärke verwendet werden. Die Lithiumionen im Aktivmaterial geraten in Schwingung und können bei niedriger Spannung und Temperatur kovalente Bindungen aufbrechen. Erhöhte Temperatur aufgrund des längeren Weges und der höheren Geschwindigkeit der Lithiumionen im Elektrolyten. Dies führt zu Wärmeerzeugung und Temperaturanstieg. Ein Temperaturanstieg auf bis zu 50°C kann nicht zu einer Verschlechterung des Elektrolyten und der Zelle führen, trägt aber dazu bei, den Innenwiderstand zu verringern und die lonenmobilität durch Verringerung der Viskosität zu erhöhen. Höhere Geschwindigkeiten der Lithium-Ionen tragen dazu bei, dass sie sich tiefer in Aktivmaterialien einlagern. Die Verwirbelung von Lithium-Ionen im Elektrolyten führt zu einer Verwirbelung der Elektrolytflüssigkeit. Dies trägt zu einer schnelleren Benetzung des Elektrolyten mit Elektrode und Separator bei. Jede Gastasche im Elektrolyten oder im Aktivmaterial stellt normalerweise ein Hindernis für die lonenbewegung dar. Da Lithium-Ionen mehr Freiheitsgrade haben, können sie dieses Hindernis der Gastaschen leicht umgehen. So wie Lithiumkationen von der Lorenzkraft beeinflusst werden, so werden auch die Anionen von Lithiumsalzen von dieser Lorenzkraft beeinflusst. Da sich Lithiumkationen und andere Anionen in Richtung einer anderen Elektrodenoberfläche bewegen, haben sie eine unterschiedliche lonenstromrichtung. Daher werden beide immer entgegengesetzt abgelenkt. Auf diese Weise wird wiederum eine Paarung von Anionen und Kationen vermieden. Außerdem stoßen Anionen und Kationen während ihrer Bewegung zu den gegenüberliegenden Elektroden nicht miteinander zusammen.

Nachfolgend werden die wesentlichen Erfindungsaspekte nochmals im Einzelnen hervorgehoben: So kann das Magnetfeld ortsfest und/oder dessen Magnetfeldstärke konstant sein. Das Magnetfeld kann quer zum elektrischen Feld ausgerichtet sein, und zwar insbesondere rechtwinklig zum elektrischen Feld oder mit einem Winkel zum elektrischen Feld, der kleiner als 90° ist.

Die Magnetfeldstärke und/oder die Ausrichtung des Magnetfelds kann bevorzugt während eines Ladevorgangs beziehungsweise einer Formation änderbar sein. Auf diese Weise können die Lithiumionen zielgerichtet auf zumindest einen bestimmten Bereich der jeweiligen Elektrode (das heißt im Ladevorgang die Anode) abgelenkt werden. In diesem Bereich erhöht sich die Lithiumeinlagerung im Vergleich zu anderen Elektroden-Bereichen.

Durch Erhöhung der Magnetfeldstärke kann die auf die Lithiumionen wirkende Lorentzkraft und damit gegebenenfalls die Wanderungsgeschwindigkeit der Lithiumionen während des Ladevorgangs erhöht werden.

In einer weiteren Ausführungsvariante kann das Magnetfeld ein Dreh-Magnetfeld sein. Alternativ dazu kann auch die Batteriezelle sich innerhalb eines ortsfesten Magnetfeldes drehen. Dadurch kann der lonenbewegung der Lithiumionen ein sinusförmiger Verlauf aufgeprägt sein, mittels dem eine Einlagerung der Lithiumionen in die Elektrode unterstützt wird.

In einer Weiterbildung der Erfindung kann der Batteriezelle zumindest zwei Drehmagnetfelder zugeordnet sein. Von diesem kann sich ein erstes Drehmagnetfeld um eine Hochachse der Batteriezelle drehen, während sich ein zweites Drehmagnetfeld um eine horizontale Querachse der Batteriezelle drehen kann. Dadurch wird der lonenbewegung ein spiralförmiger Verlauf in Richtung Elektrode (das heißt im Ladevorgang in Richtung Anode) aufgeprägt.

In einer weiteren Ausführungsvariante kann das Magnetfeld in bevorzugt gleichgerichtete Teilmagnetfelder unterteilt sein. Die Teilmagnetfelder sind zwischen Anode und Kathode in Reihe hintereinander angeordnet. In einer Ausführungsvariante kann die Magnetfeldstärke der Teilmagnetfelder in Richtung Anode gesteigert sein, wodurch der Ladevorgang signifikant erhöht werden kann.

Der Elektromagnet weist in gängiger Praxis eine Spule auf, mit der das Magnetfeld erzeugbar ist. Beispielhaft kann eine Anzahl solcher Spulen bereitgestellt werden, die umfangsverteilt um die Batteriezelle angeordnet sind. Die Spulen können mittels einer Steuereinheit derart angesteuert werden, dass sich ein Drehmagnetfeld ergibt, das um die Batteriezelle rotiert.

Das Magnetfeld des Elektromagnets kann in einfacher Weise durch Einstellung der Stromaufnahme des Elektromagnets und/oder durch Anpassung der Anzahl von Windungen in der Spule geändert werden.

Nachfolgend sind bevorzugte Ausführungsvarianten der Erfindung anhand der beigefügten Figuren beschrieben.

Es zeigen:
- Figuren 1 bis 13: jeweils unterschiedliche Ausführungsvarianten der Erfindung; und
- Figuren 14 bis 18: jeweils Ansichten einer herkömmlichen Batteriezelle die nicht von der Erfindung umfasst ist.

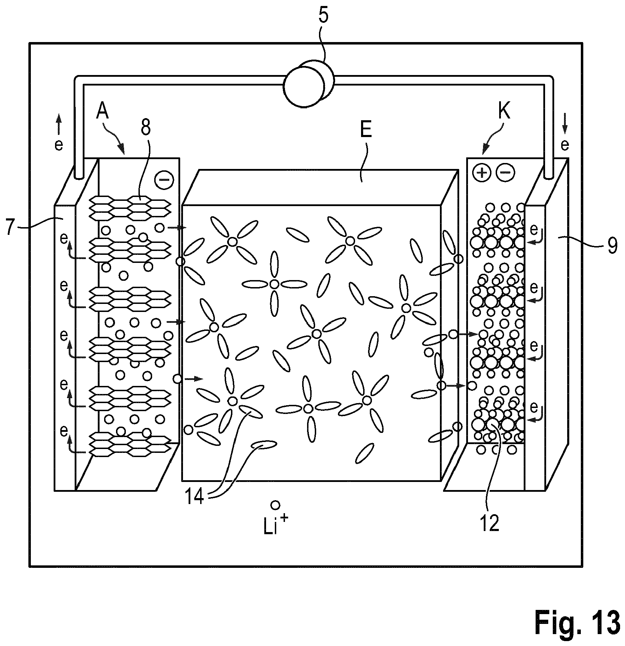

Im Hinblick auf ein einfaches Verständnis der Erfindung wird zunächst Bezug auf die Figur 13 genommen, die eine nicht von der Erfindung umfasste Lithium-Ionen-Batteriezelle während eines Entladevorgangs zeigt. Die Batteriezelle weist in der Figur 13 eine Anode A, eine Kathode K sowie einen (nicht gezeigten) zwischengeordneten Separator S auf, die allesamt mit einem Elektrolyt E benetzt sind. Ein Stromableiter 7 der Anode A sowie ein Stromableiter 9 der Kathode K sind zusammen mit einem elektrischen Verbraucher 5 in einem externen Entladestromkreis eingebunden. Im Entladevorgang werden die Lithiumionen von dem Aktivmaterial 12 der Kathode K extrahiert und bewegen sich die Lithiumionen durch den Elektrolyt E in Richtung Aktivmaterial 8 der Anode A, in dem die Lithiumionen eingelagert werden. Für einen Ladungsausgleich bewegen sich zudem die Elektronen von der Anode A über den externen Entladestromkreis zur Kathode K.

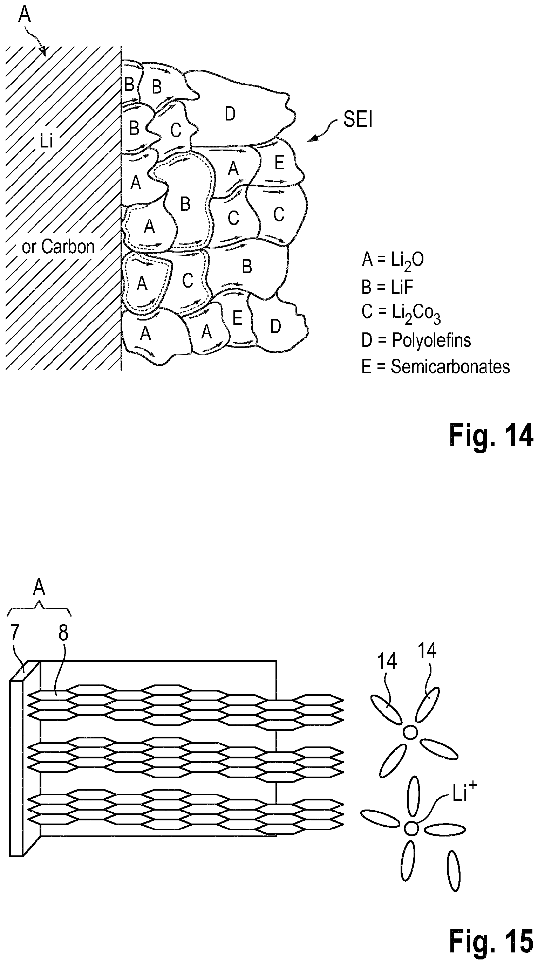

Bei der in der Figur 13 angedeuteten Lithium-Ionen-Batteriezelle ergeben sich die nachfolgend anhand der Figuren 14 bis 18 beschriebenen Probleme.

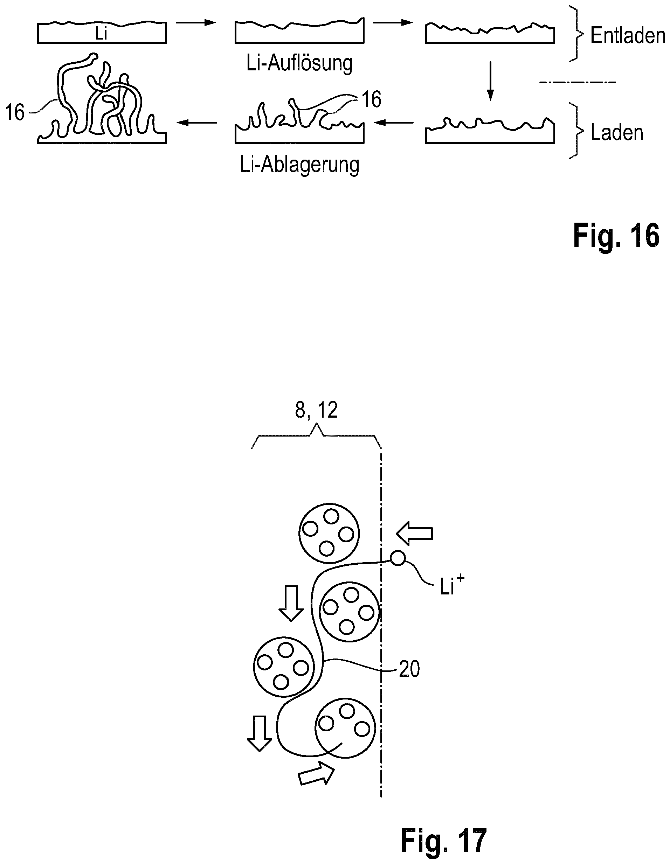

Ein erstes Problem besteht darin, dass beim Laden und Entladen keine gleichmäßig verteilte Einlagerung von Lithium-Ionen über das Aktivmaterial 8, 12 der Kathode K oder der Anode A erfolgt. Die Mobilität der Lithium-Ionen in der Zelle wird durch die lonenmobilität im Elektrolyt E, durch den Widerstand der SEI-Schicht (Solide Electrolyte Interface gemäß der Figur 14), der CEI-Schicht (Cathode Electrolyte Interface) sowie durch das Aktivmaterial 8, 12 beeinflusst. Die Lithium-Ionen nehmen bevorzugt den Weg, der den geringsten Widerstand aufweist. Dies kann zu einer ungleichmäßigen Ladungsbildung an der Elektrode A, K führen. In einem Bereich der Elektrode A, der einen hohen Widerstand aufweist (und zwar aufgrund einer mangelhaften Verteilung des leitfähigen Kohlenstoffs im Aktivmaterial 8 und/oder der Bildung lokaler Gastaschen an der Oberfläche der Elektrode A und des Elektrolyts E) wird weniger Lithium eingelagert. Das bedeutet, dass dieser Bereich - im Vergleich zu anderen Bereichen der Elektrode A mit geringerem Widerstand - eine geringere Spannung aufweist. Darüber hinaus wird in den Bereichen, die einen geringeren Widerstand gegenüber Lithiumionen aufweisen, eine größere Menge an Lithiumionen bewegt, was zur Bildung von Dendriten 16 (Figur 16) und Lithiumablagerungen führen kann. Obwohl bei Batterien davon ausgegangen wird, dass die Elektroden A, K gleichmäßig geladen sind, ist es selten der Fall, dass alle Elektrodenoberflächen gleichmäßig geladen sind. In dem Vergleichsbeispiel der Figuren 13 bis 18 gibt es keine Möglichkeit, das Verhalten des Lithiumionenflusses zu beeinflussen.

Ein zweites Problem besteht im Vergleichsbeispiel in der geringen Wanderungsgeschwindigkeit der Lithium-Ionen: Lithium-Ionen bewegen sich etwa 1000-mal langsamer als Elektronen. Das bedeutet, dass die Geschwindigkeit des Ladens und Entladens durch die Wanderungsgeschwindigkeit der Lithium-Ionen begrenzt wird. Die Wanderungsgeschwindigkeit der Lithium-Ionen wird durch den Spannungsunterschied zwischen der Elektrodenoberfläche, die ionische Leitfähigkeit des Lösungsmittels 14 (Figur 13 oder 15) und der Lithium-Ionen sowie die Zähigkeit der Aktivmaterialien 8, 12 beeinflusst. Erhöht sich die Viskosität des Elektrolyts E, so nimmt die Wanderungsgeschwindigkeit der Ionen ab. Wenn die Lösungsmittel-Hülle, in der die Ionen zur anderen Elektrode getragen wird, unzureichend ist, sinkt auch die Wanderungsgeschwindigkeit. Normalerweise variieren die Lösungsmittelschichten, die Lithium-Ionen tragen, je nach ihrer Dielektrizitätskonstante. Je höher die Dielektrizitätskonstante des Lösungsmittels 14, desto schneller bewegen sich die Lithium-Kationen. Das heißt, es gibt viele Faktoren, die die Geschwindigkeit der lonenbewegung verringern können.

Ein drittes Problem besteht in der in der Figur 16 angedeuteten Dendritenbildung: In dem Blockschaltdiagramm der Figur 16 ist in einer Abfolge zunächst ein Entladephase gezeigt, in der sich das auf in der Anode A eingelagerte Lithium auflöst. Nach der Entladephase folge eine Ladephase, in der sich das Lithium auf der Oberfläche des Anoden-Aktivmaterials 8 ablagert. Demnach bilden Lithium-Ionen keine gleichmäßige Ablagerungsschicht aus Lithium-Metall, sondern vielmehr Dendriten 16 aus Lithium-Metall. Diese Dendriten 16 wachsen mit jedem Lade-Entlade-Zyklus an Größe. Wenn diese Dendriten 16 den Separator S durchdringen, können sie einen Kurzschluss verursachen. In dem in den Figuren M bis 18 dargestellten Vergleichsbeispiel gibt es keinen Mechanismus, um solche Dendriten 16 zu brechen, wenn sie kleiner sind, so dass sie durch den Separator S nicht durchdringen können.

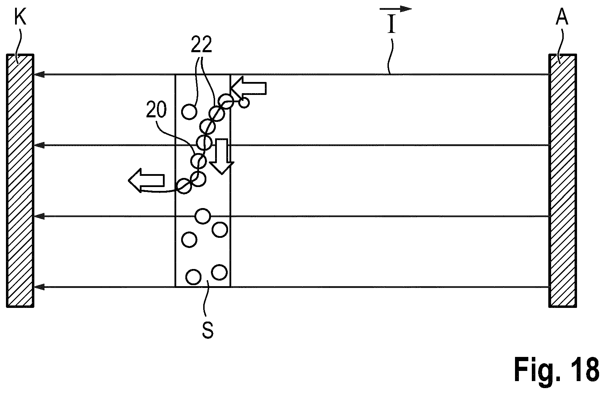

Ein viertes Problem besteht in der langsamen Interkalation bzw. Einlagerung der Lithium-Ionen im Aktivmaterial 8, 12 der Elektroden A, K, wie es in der Figur 17 angedeutet ist: Sobald die Lithium-Ionen in das Aktivmaterial 8, 12 eindringen, müssen sie eine neue kovalente Bindung mit dem Kohlenstoff in der Anode A oder dem Metalloxid in der Kathode K eingehen. Das bedeutet, dass Lithium-Ionen ein Gegenstück finden müssen, das noch keine Bindung mit Lithium eingegangen ist. Die Bewegung der Lithium-Ionen im Aktivmaterial 8, 12 ist aufgrund der Tortuosität stark eingeschränkt. Die Tortuosität kennzeichnet den Grad der Gewundenheit der Bewegungspfade 20 (Figur 18) der Lithium-Ionen im Aktivmaterial 8, 12 (Figur 17) und/oder der Bewegungspfade 20 in den Separator-Poren 22 (Figur 18). Allgemein wird die Tortuosität für die Beschreibung verschiedener physikalischer Transportprozesse verwendet und ist neben der Porosität und der Permeabilität ein Parameter zur Beschreibung der Eigenschaften poröser Materialien, wie etwa dem Separator S. Die Lithium-Ionen haben gemäß der Figur 17 über ihren Bewegungspfad 20 irgendwann mehr Freiheitsgrade in ihrer Bewegung, um sich mit einem freien Gegenmolekül zu verbinden und auch Elektronen, um eine kovalente Bindung einzugehen.

Ein fünftes Problem besteht in der langsamen lonen-Bewegung durch den Separator S, wie bereits oben anhand der Figur 18 angedeutet worden ist: Der Separator S weist eine zufällige Porosität auf, durch die Lithium-Ionen von der Anode A zur Kathode K und umgekehrt wandern können. Die im Separator S aufgrund der Porosität gebildeten Bewegungspfade 20 liegen nicht parallel zueinander. Vielmehr müssen die Lithium-Ionen einen komplexen Weg zurücklegen, damit sie die benachbarten Poren 22 des Separators S passieren können. Die Lithium-Ionen bewegen sich bevorzugt in die Richtung des elektrischen Feldes I, das durch den Spannungsunterschied zwischen Anode A und Kathode K entsteht. Dieses elektrische Feld I verläuft hauptsächlich parallel zwischen Anode A und Kathode K. Das bedeutet, dass jede Elektrodenbewegung senkrecht zu diesem elektrischen Feld I zeitaufwendig ist. Insbesondere fehlt im Vergleichsbeispiel eine erfindungsgemäß bereitgestellte Kraft für die Lithium-Ionen, die senkrecht zum elektrischen Feld verläuft, so dass sich die Ionen problemlos nicht nur in horizontaler sondern auch in vertikaler Richtung bewegen können.

Ein sechstes Problem besteht darin, dass eine kovalente Kraft gebrochen werden muss, um das Lithium-Ion zu befreien: Die Lithiumionen sind über kovalente Bindungen an das Aktivmaterial 8 (Kohlenstoff) der Anode A oder an das Aktivmaterial 12 (Metalloxid) der Kathode K gebunden. Im elektrischen Feld I brechen diese kovalenten Bindungen auf und die Lithium-Ionen werden freigesetzt. Eine weitere Möglichkeit, die kovalente Bindung zu brechen, ist die Erhöhung der Temperatur oder die Ausübung einer Quer-Bewegungskomponente auf die Lithium-Ionen. Eine solche Quer-Bewegungskomponente in Form einer vertikalen Kraft fehlt im Vergleichsbeispiel der Figuren 13 bis 18. Bei Überlagerung einer solchen Quer-Bewegungskomponente könnten die Lithium-Ionen die kovalenten Bindungen mit viel weniger Energie aufbrechen.

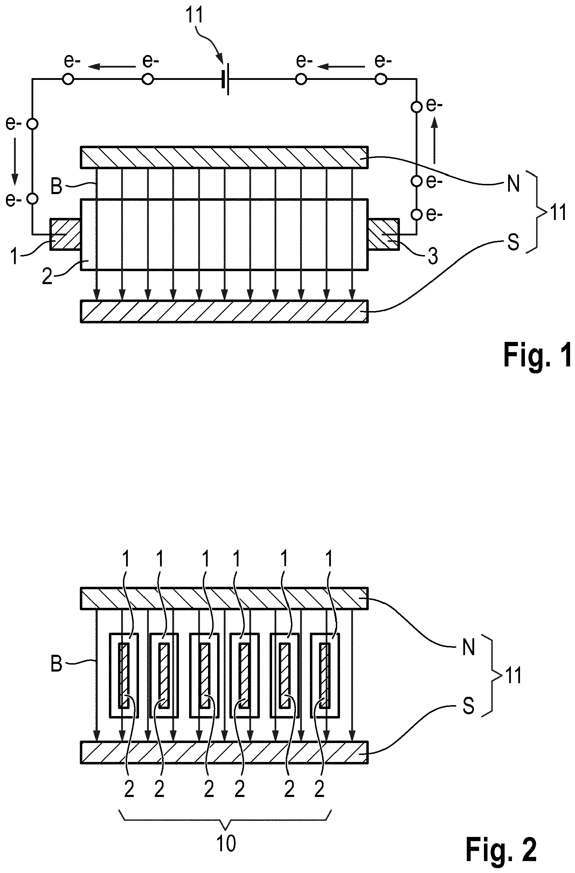

In Abkehr davon sind in den nachfolgenden Figuren 1 bis 12 jeweils unterschiedliche Ausführungsvarianten der erfindungsgemäßen Lithium-Ionen-Batteriezelle beschrieben: Der grundsätzliche Aufbau sowie die Funktionsweise der anhand der Figuren 1 bis 12 beschriebenen Batteriezelle ist identisch mit dem Aufbau sowie der Funktionsweise der in den Figuren 13 bis 18 gezeigten Batteriezelle, so dass auf deren Vorbeschreibung Bezug genommen wird. Gemäß der Figur 1 weist die erfindungsgemäße Batteriezelle 2 einen anodenseitigen Zellableiter 1 und einen kathodenseitigen Zellableiter 3 auf. Die Batteriezelle 2 ist vorliegend Bestandteil eines Zellverbands 10 (Figur 2) mit weiteren, baugleichen Batteriezellen 2. Sämtliche Batteriezellen 2 des Zellverbands 10 sind mit ihren anodenseitigen und kathodenseitigen Zellableitern 1, 3 in einem Ladekreis eingebunden, und zwar zusammen mit einem Ladegerät 11. Gemäß der Figur 1 werden im Ladevorgang die Elektronen über den externen Ladekreis von dem kathodenseitigen Zellableiter 3 zum anodenseitigen Zellableiter 1 1 verlagert. Gleichzeitig bewegen sich die Lithiumionen von der Kathode K durch den Separator S bis zur Anode A und lagern sich dort ein.

Erfindungsgemäß ist der Batteriezelle 2 ein externer Magnet M zugeordnet, dessen Magnetfeld B das elektrische Feld I (Figur 3) zwischen Anode A und Kathode K überlagert. Dadurch wird auf die Lithiumionen eine in den Figuren 3 bis 5 angedeutete Lorentzkraft F_{L} ausgeübt, mittels der eine lonenbewegung der Lithiumionen beeinflussbar ist. Durch Ausübung der Lorentzkraft F_{L} ergeben sich mehr Freiheitsgrade bei der lonenbewegung, um eine Einlagerung der Lithiumionen in der Anode A beziehungsweise Kathode K zu beschleunigen. Alternativ und/oder zusätzlich kann auch mittels der auf die Lithiumionen wirkenden Lorentzkraft F_{L} die Wanderungsgeschwindigkeit der Lithiumionen von der Anode A zur Kathode K und umgekehrt erhöht werden.

Wie aus den Figuren 3 bis 5 hervorgeht, ist das magnetische Feld B senkrecht zum elektrischen Feld I ausgerichtet. Dies ist von Bedeutung, um die Lorentzkraft F_{L} senkrecht zum elektrischen und magnetischen Feld B, I zu erzeugen. Alle drei Felder, d.h. das elektrische Feld I, das magnetische Feld B und die Lorentzkraft F_{L}, können durch die in der Figur 5 angedeutete Drei-Finger-Regel der linken Hand in ihrer Richtung identifiziert werden. Demnach ist der Daumen das elektrische Feld I und liegt parallel zum lonenstrom. Der Zeigefinger zeigt in Richtung des magnetischen Feldes B und der Mittelfinger zeigt in Richtung der Lorentzkraft F_{L}. In den Figuren ist das elektrische Feld I senkrecht zur Elektrodenoberfläche ausgerichtet. Das Magnetfeld B verläuft vom Nordpol N zum Südpol S des Magnets M.

In der Figur 1, 2 oder 3 ist das Magnet M ortsfest positioniert, und zwar mit dem Nordpol N an der Oberseite des Zellverbands 10 und dem Südpol S an der Unterseite des Zellverbands 10. Die Magnetfeldstärke des als Permanentmagnet ausgeführten Magnets M ist konstant. Ebenso ist auch der Nordpol N sowie der Südpol S unveränderlich positioniert. Das Magnetfeld B ist dabei rechtwinklig zum elektrischen Feld I ausgerichtet.

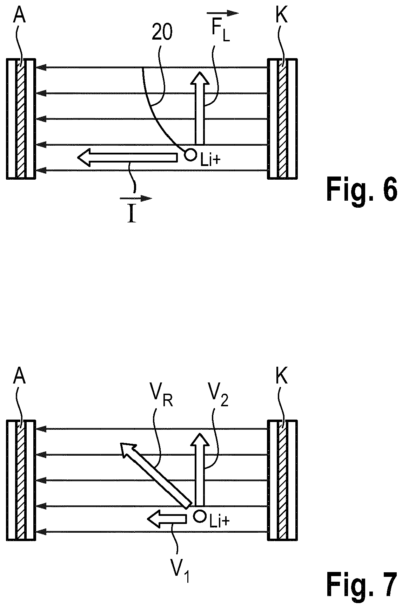

In der Figur 6 ist der Bewegungspfad 20 eines Lithiumions im elektrischen Feld I zwischen Kathode K und Anode A angedeutet. Der Bewegungspfad 20 des Lithiumions wird sowohl durch das Magnetfeld B als auch durch das elektrische Feld I beeinflusst, die die Lorentzkraft F_{L} erzeugen. In der Figur 7 ist ein Lithiumion im elektrischen Feld I zwischen Kathode K und Anode A angedeutet, auf das zudem das Magnetfeld B wirkt. Demnach bewegt sich das Lithiumion mit einer Geschwindigkeitskomponente v1 in Richtung des elektrischen Felds I sowie mit einer weiteren Quer-Geschwindigkeitskomponente v2, die von der Lorentzkraft F_{L} generiert wird. Die beiden Geschwindigkeitskomponenten v1 und v2 ergeben eine resultierende Geschwindigkeit v_{R}.

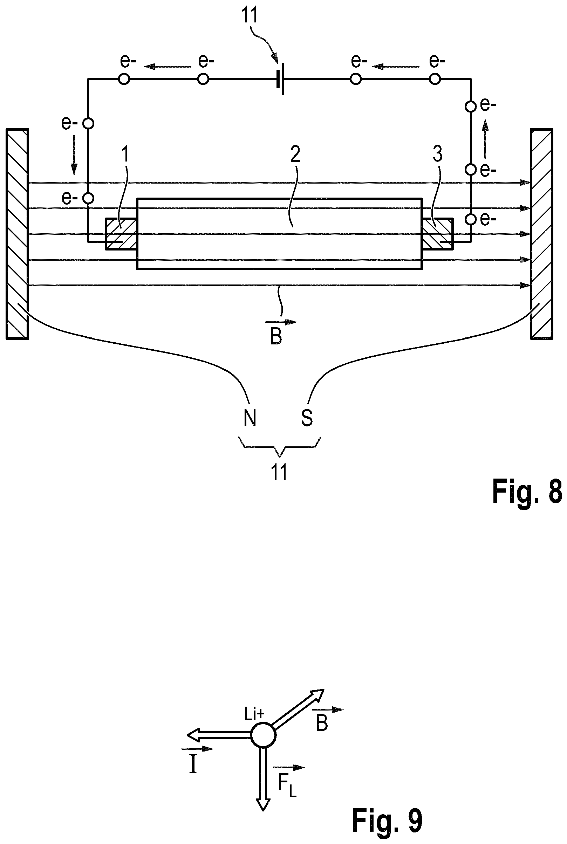

In den Figuren 8 und 9 ist eine weitere Ausführungsvariante der Erfindung gezeigt, in der der Nordpol N und der Südpol S des Magnets M nicht an der Oberseite sowie Unterseite der Batteriezelle 2 positioniert sind, sondern vielmehr an den beiden Seiten der Batteriezelle 2. In diesem Fall ist das elektrische Feld I sowie das Magnetfeld B sowie die daraus resultierende Lorentzkraft F_{L} so wie in der Figur 9 angedeutet zueinander ausgerichtet.

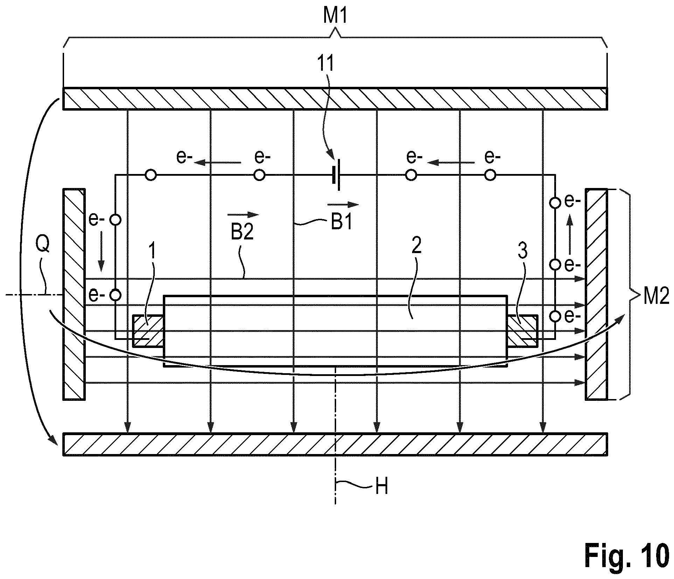

In der Figur 10 ist der Batteriezelle 2 zwei Magnete M1 und M2 zugeordnet. Der Nordpol N und der Südpol S des ersten Magnets M1 sind oberhalb und unterhalb der Batteriezelle 2 angeordnet, während der Nordpol N und der Südpol S des zweiten Magnets M2 an gegenüberliegenden Seiten der Batteriezelle 2 angeordnet sind. Das Magnet M1 ist mit Bezug auf eine horizontale Querachse Q um eine Kreisbahn um die Batteriezelle 2 drehbar. In gleicher Weise ist auch das Magnetfeld M2 mit Bezug auf eine vertikale Hochachse H um die Batteriezelle 2 drehbar. Auf diese Weise erzeugen die beiden Magnete M1, M2 die Drehmagnetfelder B1 und B2, von denen das erstes Drehmagnetfeld B1 um die Querachse Q drehbar ist, während das zweite Drehmagnetfeld B2 um die vertikale Hochachse H drehbar ist. Bei sich rotierenden Drehmagnetfeldern B1 und B2 kann der lonenbewegung der Lithiumionen ein spiralförmiger Verlauf in Richtung Anode A aufgeprägt werden.

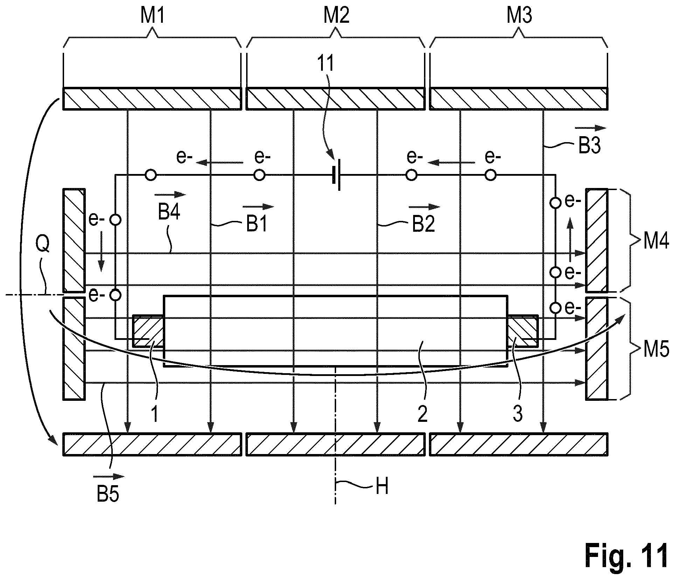

In der Figur 11 ist eine weitere Ausführungsvariante gezeigt. Demnach sind, analog zur Figur 10, ebenfalls wieder zwei Drehmagnetfelder bereitgestellt, von denen sich ein erstes Drehmagnetfeld um die horizontale Batteriezellen-Querachse Q dreht, während sich das zweite Magnetfeld um die vertikale Batteriezellen-Hochachse H dreht. Im Unterschied zur Figur 10 ist in der Figur 11 das erste Drehmagnetfeld unterteilt in bevorzugt gleichgerichtete Teilmagnetfelder B1, B2, B3, die jeweils von den Magneten M1, M2, M3 erzeugt werden. Die Teilmagnetfelder B1, B2, B3 sind zwischen Anode A und Kathode K in Reihe hintereinander angeordnet. Bevorzugt kann die Magnetfeldstärke der Teilmagnetfelder B1, B2, B3 in Richtung Anode A während eines Ladevorgangs gesteigert sein.

In gleicher Weise ist in der Figur 11 auch das um die Batteriezellen-Hochachse H rotierende zweite Magnetfeld unterteilt in zwei Magnetfelder B4 und B5, die jeweils von den Magneten M4 und M5 erzeugt werden.

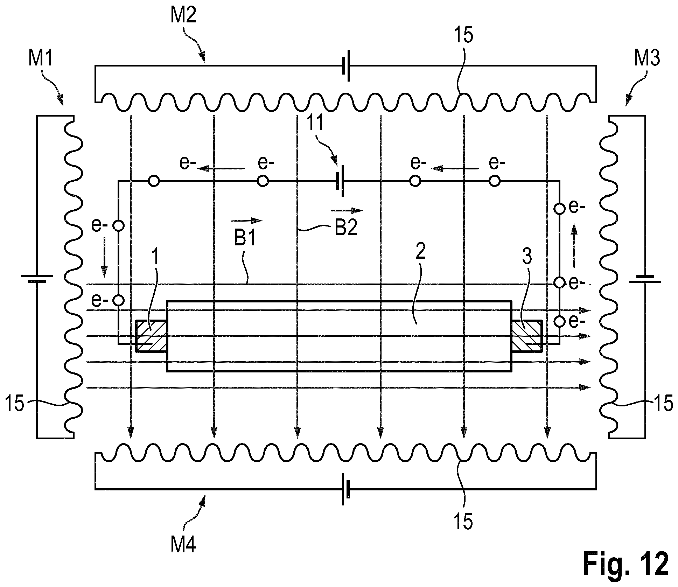

In der Figur 12 sind im Unterschied zu den vorangegangenen Ausführungsbeispielen keine Permanentmagnete, sondern vielmehr Elektromagnete M verbaut. Jedes der Elektromagnete M weist eine Spule 15 auf, mit der ein Magnetfeld erzeugbar ist. In der Figur 10 sind die Spulen 15 umfangsverteilt um die Batteriezelle 2 angeordnet. Die Spulen 15 sind mittels einer Steuereinheit derart ansteuerbar, dass sich ein Drehmagnetfeld ergibt.

### Bezugszeichenliste

- 1: anodenseitiger Zellableiter
- 2: Batteriezelle
- 3: kathodenseitiger Zellableiter
- 5: Verbraucher
- 7: anodenseitiger Stromableiter
- 8: Anoden-Aktivmaterial
- 9: kathodenseitiger Stromableiter
- 10: Zellverband
- 11: Ladegerät
- 12: Kathoden-Aktivmaterial
- 14: Lösemittel
- 15: Spule
- 16: Dentriten
- 20: Bewegungspfad
- 22: Poren
- M: Magnet
- A: Anode
- K: Kathode
- S: Separator
- E: Elektrolyt
- B: Magnetfeld
- I: elektrisches Feld
- F_{L}: Lorentzkraft
- v₁, v₂: Geschwindigkeitskomponenten
- v_{R}: resultierende Geschwindigkeit

## Patentansprüche

1. Lithium-Ionen-Batteriezelle (2) mit zumindest einer Anode (A) und einer Kathode (K) mit zwischengeordnetem Separator (S), die mit einem Elektrolyt (E) benetzt sind, wobei insbesondere während eines Ladevorgangs und/oder einer Formation sich Lithiumionen im elektrischen Feld (I) zwischen Anode (A) und Kathode (K) bewegen, **dadurch gekennzeichnet, dass** der Lithium-Ionen-Batteriezelle (2) zumindest ein Magnet (M), etwa ein Permanentmagnet oder ein Elektromagnet, zugeordnet ist, dessen Magnetfeld (B) das elektrische Feld zwischen Anode (A) und Kathode (K) überlagert, wodurch auf die Lithiumionen eine Lorentzkraft (F_{L}) ausgeübt wird, mittels der eine lonenbewegung der Lithiumionen beeinflussbar ist, wodurch insbesondere mehr Freiheitsgrade bei der lonenbewegung bereitgestellt sind, um eine Einlagerung der Lithiumionen in der Anode (A) beziehungsweise Kathode (K) zu beschleunigen.

2. Lithium-Ionen-Batteriezelle nach Anspruch 1, **dadurch gekennzeichnet, dass** das Magnetfeld (B) ortsfest und/oder dessen Magnetfeldstärke konstant ist, und/oder dass das Magnetfeld (B) quer zum elektrischen Feld (I) ausgerichtet ist, insbesondere rechtwinklig zueinander oder mit einem Winkel kleiner als 90° zueinander ausgerichtet sind.

3. Lithium-Ionen-Batteriezelle nach Anspruch 1 oder 2, **dadurch gekennzeichnet, dass** die Magnetfeldstärke und/oder die Ausrichtung des Magnetfelds (B), insbesondere während eines Ladevorgangs beziehungsweise einer Formation, änderbar sind, so dass die Lithiumionen zielgerichtet auf zumindest einen bestimmten Bereich der jeweiligen Elektrode (A, K) ablenkbar sind, so dass in diesem Bereich die Lithiumeinlagerung im Vergleich zu anderen Elektroden-Bereichen erhöht ist.

4. Lithium-Ionen-Batteriezelle nach einem der vorhergehenden Ansprüche, **dadurch gekennzeichnet, dass** durch Erhöhung der Magnetfeldstärke die auf die Lithiumionen wirkende Lorentzkraft (F_{L}) und damit gegebenenfalls die Wanderungsgeschwindigkeit der Lithiumionen erhöht ist.

5. Lithium-Ionen-Batteriezelle nach einem der vorhergehenden Ansprüche, **dadurch gekennzeichnet, dass** das Magnetfeld (B) ein Dreh-Magnetfeld ist und/oder dass die Batteriezelle (2) innerhalb des Magnetfeldes (B) dreht, wodurch der lonenbewegung der Lithiumionen ein sinusförmiger Verlauf aufgeprägt ist, mittels dem eine Einlagerung der Lithiumionen in die Elektrode (A, K) unterstützt wird.

6. Lithium-Ionen-Batteriezelle nach Anspruch 5, **dadurch gekennzeichnet, dass** der Batteriezelle (2) zumindest zwei Drehmagnetfelder (B1, B2) zugeordnet ist, von denen ein erstes Drehmagnetfeld (B1) um eine Querachse (Q) der Batteriezelle (2) dreht und ein zweites Drehmagnetfeld (B2) um eine vertikale Hochachse (H) der Batteriezelle (2) dreht, wodurch der lonenbewegung ein spiralförmiger Verlauf in Richtung Elektrode, insbesondere Anode (A), aufgeprägt wird.

7. Lithium-Ionen-Batteriezelle nach einem der vorhergehenden Ansprüche, **dadurch gekennzeichnet, dass** das Magnetfeld in bevorzugt gleichgerichtete Teilmagnetfelder (B1, B2, B3) unterteilt ist, die zwischen Anode (A) und Kathode (K) in Reihe hintereinander angeordnet sind, und dass insbesondere die Magnetfeldstärke der Teilmagnetfelder (B1, B2, B3) in Richtung Anode (A) gesteigert ist, und zwar insbesondere während eines Ladevorgangs oder einer Formation.

8. Lithium-Ionen-Batteriezelle nach einem der vorhergehenden Ansprüche, **dadurch gekennzeichnet, dass** der Elektromagnet zumindest eine Spule (15) aufweist, mit der das Magnetfeld erzeugbar ist, und dass insbesondere eine Anzahl von Spulen (15) bereitgestellt ist, die umfangsverteilt um die Batteriezelle (2) angeordnet sind, und dass die Spulen (15) mittels einer Steuereinheit (17) derart ansteuerbar sind, dass sich ein Drehmagnetfeld ergibt.

9. Lithium-Ionen-Batteriezelle nach einem der vorhergehenden Ansprüche, **dadurch gekennzeichnet, dass** das Magnetfeld des Elektromagnets durch Einstellung der Stromaufnahme des Elektromagnets und/oder durch Anpassung der Anzahl von Windungen in der Spule (15) änderbar ist.

10. Verfahren zur Fertigung einer Batteriezelle (2) nach einem der vorhergehenden Ansprüche, wobei insbesondere während der Batteriezellen-Fertigung eine Formation durchgeführt wird, in der eine Solide Electrolyte Interface (SEI) vollständig ausgebildet wird, die eine Grenzschicht zwischen dem Elektrolyt (E) und der Anode (A) darstellt, und eine Cathode Electrolyte Interface (CEI) vollständig ausgebildet wird, die eine Grenzschicht zwischen dem Elektrolyt (E) und der Kathode (K) darstellt, und wobei die Batteriezelle (2) zumindest in einem während der Formation erfolgenden Ladevorgang mit dem Magnetfeld (B) beaufschlagt wird.
